# EUROPÄISCHE PATENTSCHRIFT

(11) **EP 1 291 449 B1**
(45) Veröffentlichungstag und Bekanntmachung des Hinweises auf die Patenterteilung: **03.12.2014**
(21) Anmeldenummer: 02405628.5
(22) Anmeldetag: 19.07.2002
(51) Int. Cl.: C23C 4/06, C23C 4/18

(54) **Beschichtungsverfahren und beschichtetes reibungsbehaftetes Grundmaterial**
Coating process and coated substrate subject to friction
Procédé de revêtement et substrat revêtu sujet à la friction

(30) Priorität: 03.08.2001 CH 14302001
(43) Veröffentlichungstag der Anmeldung: 12.03.2003
(73) Patentinhaber: Alstom Technology Ltd, 5400 Baden (CH)
(72) Erfinder: Fried, Reinhard, 5415 Nussbaumen (CH)

(56) Entgegenhaltungen:
- EP-A- 0 845 547
- EP-A- 0 961 017
- US-A- 5 863 668
- US-A- 5 951 892
- US-A- 6 129 988
- PATENT ABSTRACTS OF JAPAN vol. 017, no. 176 (C-1045), 6. April 1993 (1993-04-06) & JP 04 333575 A (NIPPON PARKERIZING CO LTD), 20. November 1992 (1992-11-20)

## Beschreibung

### TECHNISCHES GEBIET

Die Erfindung betrifft ein Verfahren zur Beschichtung eines Grundmaterials mit einem Anstreifbelag aus MCrAlY mittels eines thermischen Spritzverfahrens gemäss dem Oberbegriff des Anspruchs 1 und ein Grundmaterial mit einem Anstreifbelag aus MCrAlY gemäss dem Oberbegriff des Anspruchs 7.

### STAND DER TECHNIK

Es ist allgemein und zahlreich bekannt, Turbinenschaufeln, also Leit- oder Laufschaufeln von Gasturbinen, mit einer oder mehreren Schutzschichten zu versehen, um die Turbinenschaufel vor den thermischen und mechanischen Belastungen, vor Oxidation oder anderen schädlichen Einflüssen während des Betriebes zu schützen und die Lebensdauer der Turbinenschaufel auf diese Weise zu verlängern. Dabei besteht eine erste Schutzschicht der Turbinenschaufel in der Regel aus einer metallischen Legierung wie MCrAIY, wobei M für Ni, Co oder Fe steht. Diese Art der metallischen Beschichtung dient als Schutz vor Oxidation. Darauf wird mit anderen Prozessparametern eine rauhere Schicht aus MCrAIY aufgetragen. Diese Schicht wird auch als "bond-coating" bezeichnet. Solche metallischen Beschichtungen und Verfahren zur Beschichtung sind zahlreich aus dem Stand der Technik und beispielsweise aus US-A-3,528,861, US-A-4,585,481, US-A-4,152,223 US-A- 3,754,903, US-A-3,676,085, US-A-4,346,137, US-A-4,419,416, US-A-4,743,514 US-A-4,313,760 oder US-A-4,973,445 bekannt.

Zudem wird eine zweite Schutzschicht aus TBC (Thermal Barrier Coating), welche aus einem keramischen Material (Y stabilisiertes Zr-Oxid) besteht und als thermischer Schutz dient, aufgebracht. US-A-4,055,705, US-A-4,248,940, US-A-4,321,311 oder US-A-4,676,994 offenbaren derartige keramische Schutzschichten. Nachgeschaltete Wärmebehandlungen (Diffusion heat treatment, DHT) sorgen danach für eine verbesserte Haftung zwischen der Beschichtung und dem Grundmaterial.

Eine Hochtemperaturschutzschicht, welche ausserdem besonders abriebfest sein soll, offenbart EP-A-961,017. In der obersten Schicht aus MCrAlY ist zusätzlich ein Anteil Cr₃C₂ fein verteilt. Diese Schutzschicht soll insbesondere thermisch hoch belastete Bereiche eines damit ausgerüsteten Bauteils vor Korrosion und fliegenden Partikeln schützen.

Die Beschichtungen werden mit herkömmlichen Beschichtungsverfahren, so etwa thermische Spritzverfahren wie Plasma-Spritzverfahren (air plasma spraying, APS, low pressure plasma spraying, LPPS, oder vakuum plasma spraying VPS, High power plama spraying, HPPS) Hochgeschwindigkeitsspritzen (high velocity oxy-fuel, HVOF), Flammspritzen, Detonationsspritzverfahren, Drahtspritzen oder Hochdruckluftspritzen aufgetragen. US-A-6,083,330, der Artikel Development in thermal spray coatings, Engine yearbook 2001, p. 92 - 99*,* EP-A3-911,422, US-A-5,652,028, EP-A1-482,831 oder US-A-5,741,556 offenbaren derartige Verfahren zum Auftragen der oben genannten Beschichtungen. Daneben sind elektrische oder chemische Aufdampfverfahren (physical or chemical vapour deposition PVD, CVD) beispielsweise aus US-A-4,152,223 oder US-A-4,275,090 bekannt.

Die Anwendung von diesen Beschichtungen bei Panzerungen bzw. Anstreifbelägen, wie sie zum Beispiel bei Dichtungsspitzen von Labyrinthdichtungen oder an den Schaufelspitzen von Turbinenschaufeln vorkommen, ist von besonderer Bedeutung, da diese Teile hier während des Betriebs Anstreifvorgängen unterliegen. Die Panzerung arbeitet sich in einen Einlaufbelag eines gegenüberliegenden, zweiten Bauteils ein. Im Falle einer Gasturbinenschaufel ist dieses zweite Bauteil ein Wärmestausegment. Derartige Einlaufbeläge sind abreibbar und bestehen meist aus einer korrosions- und erosionsfesten Schicht. In diesem Zusammenhang wurde schon vorgeschlagen, durch Ausrüsten der Oberfläche mit einer geeigneten Struktur die mechanischen Eigenschaften des Einlaufbelags zu verbessern (US-A-5,951,892). Ein Anstreifbelag an der Spitze einer Gasturbinenschaufel ist insbesondere dann erforderlich, wenn die Festigkeit und die Härte der Einlaufbeläge erhöht wird und sich die Abarbeitung der Gasturbinenschaufel auf diese Art zusätzlich verstärkt. Während des Betriebes stellt sich durch den Anstreifvorgang zwischen dem Anstreifbelag und dem Einlaufbelag ein minimaler Spalt ein. Der Wirkungsgrad eines Verdichters oder einer Turbine hängt jedoch in verstärktem Masse von der Spaltgrösse zwischen dem rotierenden und dem stehenden Bauteil ab. Er wird durch die zunehmende Abarbeitung der Schaufelspitzen nachteilig vermindert.

### DARSTELLUNG DER ERFINDUNG

Es ist Aufgabe der Erfindung, ein Verfahren zum Herstellen eines Anstreifbelages zu schaffen, das sich fertigungstechnisch möglichst einfach durchführen lässt und eine hochwertige Panzerung ergibt. Zudem soll insbesondere eine überlegene Schnittleistung bzw. Schneidfähigkeit dieses Anstreifbelages erreicht werden. Die Erfindung bezieht sich auch auf ein Grundmaterial, welches mit dem erfindungsgemässen Verfahren beschichtet ist und einen Anstreifbelag aufweist.

Erfindungsgemäss wird diese Aufgabe bei einem Verfahren gemäss dem Oberbegriff des Anspruchs 1 dadurch gelöst, dass gleichzeitig mit dem MCrAIY-Pulver ein keramisches, pulverförmiges Material der Injektionsdüse zugeführt wird und beide Materialien zusammen auf das Grundmaterial aufgetragen werden, wobei das keramische Pulver zum MCrAlY-Pulver in einem Mischungsverhältnis zwischen 5:95 bis 65:35 (Keramik : MCrAlY) beigefügt wird, und vor oder nach der Diffusionswärmebehandlung die reibungsbehafteten Stellen des aufgetragenen Anstreifbelags in Zacken- oder in Spitzenform geschnitten werden.

Die Erfindung bezieht sich auch auf ein reibungsbehaftetes Grundmaterial, beschichtet mit einem MCrAlY-Anstreifbelag gemäss einem Verfahren nach einem der Ansprüche 1 bis 6, wobei der Anstreifbelag MCrAlY und keramische Partikel in einem Mischungsverhältnis zwischen 5:95 bis 65:35 (Keramik : MCrAlY) enthält und an reibungsbehafteten Stellen in Zacken- oder in Spitzenform geschnitten ist.

Als keramisches Pulver kann eines oder eine Kombination der folgenden Materialien Al₂O₃, Si₃N₄, SiC, AIN, Cr₃C₂ und MoSi₂ oder gleichwertige Materialien verwendet werden, wobei die beiden Pulver der Injektionsdüse einzeln oder gemeinsam zugeführt werden können. Bei der Verwendung von SiC bilden sich vorteilhaft nach der Wärmebehandlung Hartphasen, bestehend aus Siliziden, Carbiden usw. aus. Das keramische Pulver wird zum MCrAlY-Pulver in einem Mischungsverhältnis zwischen 5:95 bis 65:35 (Keramik : MCrAlY) beigefügt.

Die keramischen Partikel erhöhen die Schneidfähigkeit der Beschichtung. Die Zacken- oder Spitzenform kann je nach Anwendungsfall beispielsweise in eine Höhe von 0,1 mm bis 1 mm geschnitten werden. Durch die besondere Form der reibungsbehafteten Stellen stehen immer genügend Keramikkanten zur Verfügung, so dass eine ausreichende Schneidfähigkeit und Platz für ein ausreichendes Spanvolumen ermöglicht werden. Zusätzlich kann die aufgetragene Schutzschicht segmentiert sein, um für einen Spannungsabbau zu sorgen.

Als Grundmaterial wird es sich vorteilhaft um die Spitze einer Gasturbinenschaufel oder ein anderes reibungsbehaftetes Teil einer Gasturbine oder eines Verdichters handeln.

Als thermisches Spritzverfahren kann ein Plasma-Spritzverfahren, Hochgeschwindigkeitsspritzen, Flammspritzen, Detonationsspritzverfahren, Drahtspritzen oder Hochdruckluftspritzen verwendet werden.

### KURZE BESCHREIBUNG DER ZEICHNUNGEN

Die Erfindung ist anhand der beigefügten Zeichnungen näher erläutert, wobei
- **Fig. 1**: eine Turbinenschaufel mit einer erfindungsgemässen Beschichtung an der Spitze darstellt und
- **Fig. 2**: ein Schnittbild mit einer im MCrAIY eingelagerten SiC-Keramik nach erfolgter Wärmebehandlung zeigt,
- **Fig. 3**: ein Schnittbild mit einer im MCrAlY eingelagerten Al₂O₃-Keramik nach erfolgter Wärmebehandlung zeigt und
- **Fig. 4**: ein Schnittbild der Spitze der Turbinenschaufel darstellt, welche mit einem Laser-Modellierungs-Verfahren bearbeitet wurde.

Es werden nur die für die Erfindung wesentlichen Elemente dargestellt.

### WEG ZUR AUSFÜHRUNG DER ERFINDUNG

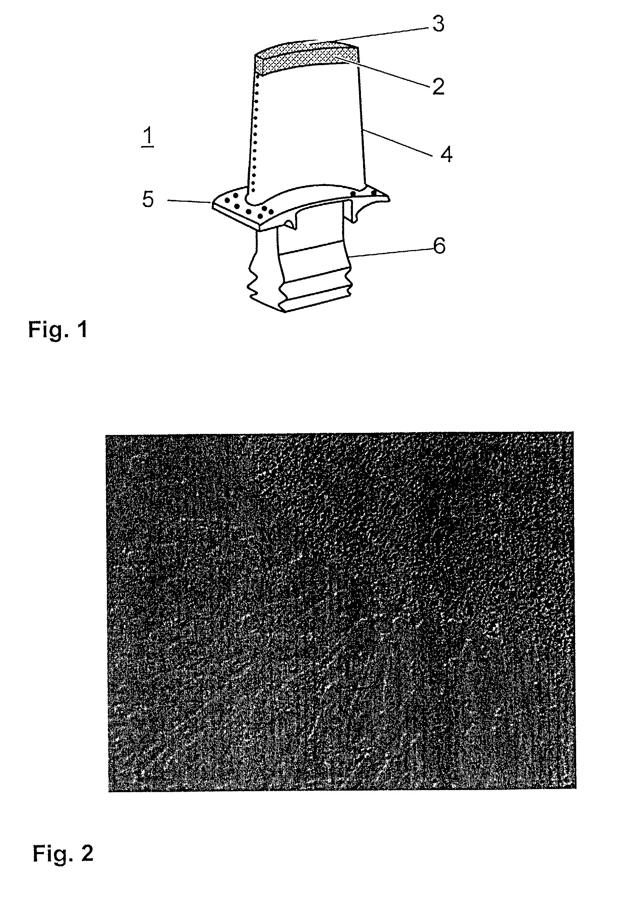

Die Erfindung bezieht sich auf ein Verfahren zur Beschichtung eines reibungsbehafteten Grundmaterials 1 mit einem Anstreifbelag 3 aus MCrAlY, wie dies in der Figur 1 beispielhaft dargestellt ist. Dies geschieht durch im Stand der Technik bekannte thermischen Spritzverfahren wie Plasma-Spritzverfahren, Hochgeschwindigkeitsspritzen, Flammspritzen, Detonationsspritzverfahren, Drahtspritzen oder Hochdruckluftspritzen. Bei diesen Verfahren werden die Beschichtungsmaterialien in einer energiereichen Wärmequelle, so zum Beispiel in einem Trägergas, erschmolzen und durch geeignete Mittel als Tröpfchen auf das Grundmaterial 1 aufgetragen.

In dem vorteilhaften Ausführungsbeispiel der Figur 1 handelt es sich bei dem reibungsbehafteten Grundmaterial 1 um eine Turbinenschaufel 1, also um eine Leit- oder Laufschaufel einer Gasturbine oder eines Verdichters, mit einer Spitze 2, einer Plattform 3 und einem Schaufelfuss 4. Die Spitze 2, welche während des Betriebes der Turbinenschaufel 1 reibungsbehaftet ist, ist mit dem erfindungsgemässen Verfahren beschichtet worden. Es kann sich selbstverständlich um ein anderes, reibungsbehaftetes Teil einer Gasturbine oder eines Verdichters handeln.

Die Turbinenschaufel 1 besteht beispielsweise aus einer Superlegierung. Eine solche Superlegierung auf der Basis von Nickel ist zum Beispiel aus der Patentschrift US-A-5,759,301 bekannt. Eine Turbinenschaufel aus einer Cobaltbasis-Superlegierung oder aus Stahl ist ebenso denkbar. Die Turbinenschaufel 1 wird mit dem oben genannten Verfahren mit einer metallischen Legierung aus MCrAIY beschichtet, wobei das MCrAIY als Pulver einer Injektionsdüse zugeführt wird, dort erschmolzen und dann auf die Turbinenschaufel 1 aufgetragen wird.

Erfindungsgemäss wird gleichzeitig mit dem MCrAIY-Pulver ein keramisches, pulverförmiges Material auf die Turbinenschaufel 1 aufgetragen. Als keramisches Pulver kann eines oder eine Kombination der folgenden Materialien Al₂O₃, Si₃N₄, SiC, AIN, Cr₃C₂ oder MoSi₂ verwendet werden. Weiter können andere oxidationsfeste Keramiken verwendet werden, die in Umgebungen von bis oder sogar über 1200°C stabil sind.

Danach wird eine Diffusionswärmebehandlung durchgeführt wird. Eine solche Wärmebehandlung ist aus dem Stand der Technik bekannt und wird zum Beispiel bei 1150°C in 1 bis 10 Stunden durchgeführt. Sie dient zur verbesserten Haltbarkeit der aufgetragenen Schutzschicht auf dem Grundmaterial. Dabei wird eine stoffschlüssige Verbindung von der MCrAIY-Matrix zum Grundmaterial erreicht.

Die Figur 2 zeigt ein Schliffbild von einer eingelagerten Keramik um SiC, welches nach der Diffusionswärmebehandlung mit dem MCrAIY reagiert hat, so dass Silizide und Carbide entstanden sind. Die keramischen Partikel bilden hier mit dem MCrAIY als Matrix eine nadelförmige Hartstoffphase.

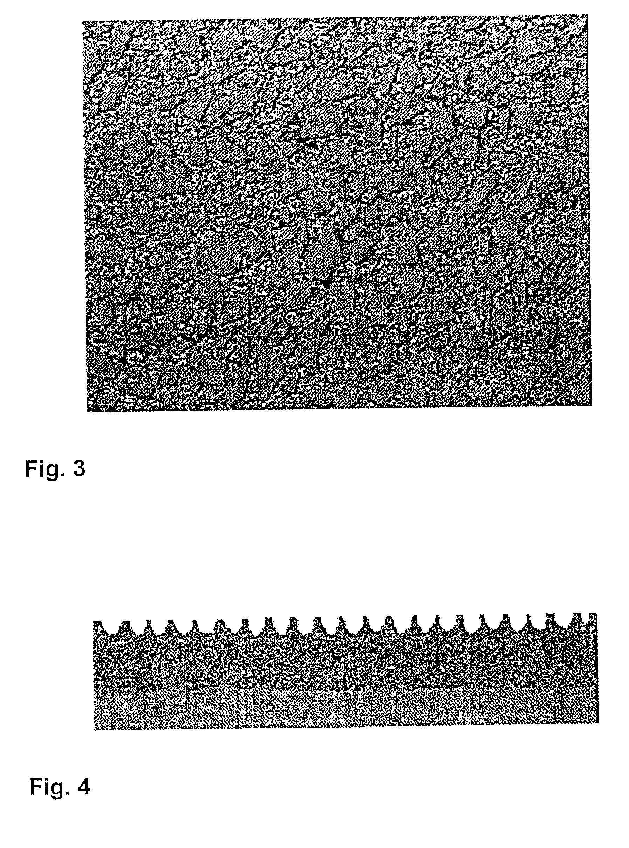

Die Figur 3 zeigt ein Schliffbild von einer eingelagerten Keramik Al₂O₃. Nach der Diffusionswärmebehandlung ist die gespritzte MCrAlY-Matrix eine intensive Diffusionsverbindung mit dem Grundmaterial eingegangen.

Wie aus der Figur 4 sichtbar sind die reibungsbehafteten Stellen der aufgetragenen Beschichtung 3 in Zacken- oder in Spitzenform oder in einer anderen, gleichwertigen Form geschnitten. Dabei können ein Laser oder andere geeignete Schnittwerkzeuge verwendet werden. Durch die besondere Form der reibungsbehafteten Stellen stehen immer genügend Keramikschneidkanten zur Verfügung, so dass eine ausreichende Schneidfähigkeit und Platz für ein ausreichendes Spanvolumen ermöglicht werden. Im Prinzip kann das Formschneiden auch vor der Wärmebehandlung geschehen. Die Zacken- oder Spitzenform kann je nach Anwendungsfall beispielsweise in eine Höhe von 0,1 mm bis 1 mm geschnitten werden. Zusätzlich kann die aufgetragene Schutzschicht segmentiert, d.h. unterbrochen oder anders eingeteilt sein, um für einen Spannungsabbau zu sorgen.

Die beiden Pulver können der Injektionsdüse während des Beschichtungsverfahrens einzeln oder gemeinsam zugeführt werden, wobei das keramische Pulver dem MCrAIY-Pulver in einem Mischungsverhältnis zwischen 5:95 bis 65:35 (Keramik : MCrAlY) beigefügt wird. Das MCrAlY dient dabei als Matrix in der Form einer Haltefunktion für die Keramik und der beigefügte Hartstoff erleichtert die Schneidfähigkeit. Je mehr von den Keramikpartikeln zugefügt werden, desto schneidfähiger ist der aufgetragene Anstreifbelag 3.

### BEZUGSZEICHENLISTE

- 1: Grundmaterial, Turbinenschaufel
- 2: Spitze der Turbinenschaufel 1
- 3: Anstreifbelag
- 4: Schaufelblatt
- 5: Plattform
- 6: Schaufelfuss

## Patentansprüche

1. Verfahren zur Beschichtung eines reibungsbehafteten Grundmaterials (1) mit einem Anstreifbelag (3), der MCrAlY aufweist und mittels eines thermischen Spritzverfahrens aufgebracht wird und der sich im Betrieb in einen Einlaufbelag eines gegenüberliegenden, zweiten Bauteil hineinarbeitet, wobei das MCrAlY in Pulverform einer Injektionsdüse zugeführt wird und auf das reibungsbehaftete Grundmaterial (1) aufgetragen wird, und wobei danach eine Diffusionswärmebehandlung durchgeführt wird,
**dadurch gekennzeichnet, dass**
- gleichzeitig mit dem MCrAIY-Pulver ein keramisches, pulverförmiges Material der Injektionsdüse zugeführt wird und beide Materialien zusammen auf das Grundmaterial (1) aufgetragen werden, wobei
- das keramische Pulver zum MCrAlY-Pulver in einem Mischungsverhältnis zwischen 5:95 bis 65:35 (Keramik : MCrAlY) beigefügt wird, und
- vor oder nach der Diffusionswärmebehandlung die reibungsbehafteten Stellen des aufgetragenen Anstreifbelags (3) in Zacken- oder in Spitzenform geschnitten werden.

2. Verfahren nach Anspruch 1,
**dadurch gekennzeichnet, dass**
als keramisches Pulver eines oder eine Kombination der folgenden Materialien Al₂O₃, Si₃N₄, SiC, AIN, Cr₃C₂, MoSi₂ verwendet wird.

3. Verfahren nach Anspruch 1 oder 2,
**dadurch gekennzeichnet, dass**
die beiden Pulver der Injektionsdüse einzeln oder gemeinsam zugeführt werden.

4. Verfahren nach Anspruch 1 oder 2,
**dadurch gekennzeichnet, dass**
die Zacken- oder Spitzenform in eine Höhe von 0,1 mm bis 1 mm geschnitten werden.

5. Verfahren nach Anspruch 1 oder 2,
**dadurch gekennzeichnet, dass**
als Grundmaterial (1) eine Turbinenschaufel (1) beschichtet wird, wobei die reibungsbehaftete Stelle die Spitze (2) der Turbinenschaufel (1) ist.

6. Verfahren nach einem der vorhergehenden Ansprüche,
**dadurch gekennzeichnet, dass**
als thermisches Spritzverfahren ein Plasma-Spritzverfahren, Hochgeschwindigkeitsspritzen, Flammspritzen, Detonationsverfahren, Drahtspritzen oder Hochdruckluftspritzen verwendet wird.

7. Reibungsbehaftetes Grundmaterial (1), beschichtet mit einem MCrAlY-Anstreifbelag (3) gemäss einem Verfahren nach einem der Ansprüche 1 bis 7,
**dadurch gekennzeichnet, dass**
der Anstreifbelag (3) MCrAlY und keramische Partikel in einem Mischungsverhältnis zwischen 5:95 bis 65:35 (Keramik : MCrAlY) enthält und an reibungsbehafteten Stellen in Zacken- oder in Spitzenform geschnitten ist.

8. Grundmaterial (1) nach Anspruch 6 oder 7,
**dadurch gekennzeichnet, dass**
das keramisches Pulver eines oder eine Kombination der folgenden Materialien Al₂O₃, Si₃N₄, SiC, AIN, Cr₃C₂ und MoSi₂ ist.

9. Grundmaterial (1) nach Anspruch 6 oder 7,
**dadurch gekennzeichnet, dass**
das Grundmaterial (1) eine Turbinenschaufel (1) ist, wobei die reibungsbehaftete Stelle die Spitze (2) der Turbinenschaufel (1) ist.

10. Grundmaterial (1) nach Anspruch 6 oder 7,
**dadurch gekennzeichnet, dass**
der Anstreifbelag (3) segmentiert ist.

11. Grundmaterial (1) nach Anspruch 6 oder 7,
**dadurch gekennzeichnet, dass**
die Zacken- oder Spitzenform eine Schnitthöhe von 0,1 mm bis 1 mm aufweist.

## Claims

1. Process for coating a base material (1), which is subject to friction, with a stripping coating (3) which comprises MCrAlY and is applied by means of a thermal spraying process and which, during operation, works itself into a run-in coating on an opposite, second component, the MCrAlY being fed in powder form to an injection nozzle and being applied to the base material (1) which is subject to friction, and then a diffusion heat treatment being carried out,
**characterized in that**
- at the same time as the MCrAlY powder, a ceramic material in powder form is fed to the injection nozzle, and the two materials are applied to the base material (1) together, wherein
- the ceramic powder is added to the MCrAlY powder in a mixing ratio of between 5:95 and 65:35 (ceramic:MCrAlY), and
- before or after the diffusion heat treatment, those locations of the applied stripping coating (3) which are subject to friction are cut into a toothed or pointed shape.

2. Process according to Claim 1, **characterized in that** the ceramic powder used is one or a combination of the following materials: Al₂O₃, Si₃N₄, SiC, AlN, Cr₃C₂, MoSi₂.

3. Process according to Claim 1 or 2, **characterized in that** the two powders are fed to the injection nozzle individually or together.

4. Process according to Claim 1 or 2, **characterized in that** the toothed or pointed shape is cut to a height of 0.1 mm to 1 mm.

5. Process according to Claim 1 or 2, **characterized in that** the base material (1) which is coated is a turbine blade or vane (1), and the location which is subject to friction is the tip (2) of the turbine blade or vane (1).

6. Process according to one of the preceding claims, **characterized in that** the thermal spraying process used is a plasma spraying process, high-velocity spraying, flame spraying, a detonation process, wire spraying or high-pressure air spraying.

7. Base material (1) which is subject to friction and is coated with a MCrAlY stripping coating (3) by a process according to one of Claims 1 to 7, **characterized in that** the stripping coating (3) contains MCrAlY and ceramic particles in a mixing ratio of between 5:95 and 65:35 (ceramic:MCrAlY) and is cut into a toothed or pointed shape at locations which are subject to friction.

8. Base material (1) according to Claim 6 or 7, **characterized in that** the ceramic powder is one or a combination of the following materials: Al₂O₃, Si₃N₄, SiC, AlN, Cr₃C₂ and MoSi₂.

9. Base material (1) according to Claim 6 or 7, **characterized in that** the base material (1) is a turbine blade or vane (1), and the location which is subject to friction is the tip (2) of the turbine blade or vane (1).

10. Base material (1) according to Claim 6 or 7, **characterized in that** the stripping coating (3) is segmented.

11. Base material (1) according to Claim 6 or 7, **characterized in that** the toothed or pointed shape has a cut height of 0.1 mm to 1 mm.

## Revendications

1. Procédé de revêtement d'un substrat sujet à la friction (1) avec une couche abradable (3), qui présente du MCrAlY et qui est déposée au moyen d'un procédé de projection à chaud et qui pénètre en fonctionnement dans une couche d'entrée d'un deuxième composant opposé, dans lequel on fournit le MCrAlY sous forme pulvérulente à une buse d'injection et on le dépose sur le substrat sujet à la friction (1), et dans lequel on effectue ensuite un traitement thermique de diffusion, **caractérisé en ce que**
- en même temps que la poudre de MCrAlY, on fournit un matériau céramique pulvérulent à la buse d'injection et on dépose les deux matériaux ensemble sur le substrat (1), dans lequel
- on ajoute la poudre céramique à la poudre de MCrAlY dans un rapport de mélange compris entre 5:95 et 65:35 (Céramique : MCrAlY), et
- avant ou après le traitement thermique de diffusion, on découpe les points sujets à la friction de la couche abradable déposée (3) en forme de dent ou en forme de pointe.

2. Procédé selon la revendication 1, **caractérisé en ce que** l'on utilise comme poudre céramique un ou une combinaison des matériaux suivants: Al₂O₃, Si₃N₄, SiC, AlN, Cr₃C₂, MoSi₂.

3. Procédé selon la revendication 1 ou 2, **caractérisé en ce que** l'on fournit les deux poudres séparément ou ensemble à la buse d'injection.

4. Procédé selon la revendication 1 ou 2, **caractérisé en ce que** l'on découpe la forme de dent ou la forme de pointe à une hauteur de 0,1 mm à 1 mm.

5. Procédé selon la revendication 1 ou 2, **caractérisé en ce que** l'on revêt comme substrat (1) une aube de turbine (1), dans lequel le point sujet à la friction est la pointe (2) de l'aube de turbine (1).

6. Procédé selon l'une quelconque des revendications précédentes, **caractérisé en ce que** l'on utilise comme procédé de projection à chaud un procédé de projection au plasma, une projection à grande vitesse, une projection à la flamme, un procédé par détonation, une projection à fil, ou une projection à l'air sous haute pression.

7. Substrat sujet à la friction (1), revêtu avec une couche abradable de MCrAlY (3) par un procédé selon l'une quelconque des revendications 1 à 7, **caractérisé en ce que** la couche abradable (3) contient des particules de MCrAlY et de céramique dans un rapport de mélange compris entre 5:95 et 65:35 (céramique : MCrAlY) et est découpée en forme de dent ou en forme de pointe à des points sujets à la friction.

8. Substrat (1) selon la revendication 6 ou 7, **caractérisé en ce que** la poudre céramique est un ou une combinaison des matériaux suivants: Al₂O₃, Si₃N₄, SiC, AlN, Cr₃C₂ et MoSi₂.

9. Substrat (1) selon la revendication 6 ou 7, **caractérisé en ce que** le substrat (1) est une aube de turbine (1), dans lequel le point sujet à la friction est la pointe (2) de l'aube de turbine (1).

10. Substrat (1) selon la revendication 6 ou 7, **caractérisé en ce que** la couche abradable (3) est segmentée.

11. Substrat (1) selon la revendication 6 ou 7, **caractérisé en ce que** la forme de dent ou de pointe présente une hauteur de découpage de 0,1 mm à 1 mm.
